Europäisches Patentamt

European Patent Office

Office européen des brevets

(11) Publication number: **0 186 279**
**B1**

# EUROPEAN PATENT SPECIFICATION

(45) Date of publication of the patent specification:
04.04.90

(51) Int. Cl.⁴: **B32B 27/32, B32B 27/08**

(21) Application number: **85307710.5**

(22) Date of filing: **25.10.85**

(54) Oriented multi-layer heat sealable film.

(30) Priority: **28.12.84 US 687308**
**28.12.84 US 687417**
**28.12.84 US 687391**
**28.12.84 US 687392**

(43) Date of publication of application:
**02.07.86 Bulletin 86/27**

(45) Publication of the grant of the patent:
**04.04.90 Bulletin 90/14**

(84) Designated Contracting States:
**AT BE CH DE FR GB IT LI LU NL SE**

(56) References cited:
**EP-A- 0 144 642**
**GB-A- 2 029 762**
**US-A- 4 214 039**
**US-A- 4 294 889**

(73) Proprietor: **MOBIL OIL CORPORATION, 150 East 42nd Street, New York New York 10017(US)**

(72) Inventor: **Clauson, Melvil Bernard, 114 Bostwick Avenue, Newark New Jersey 14513(US)**
Inventor: **Touhsaent, Robert Edward, 5 Dahlia Drive, Fairport New York, 14450(US)**
Inventor: **Wagner, John Ralph, Jr., 300 Ashley Drive, Rochester New York 14620(US)**

(74) Representative: **Cooper, John Anthony et al, Mobil Court 3 Clements Inn, London WC2A 2EB(GB)**

**Description**

This invention relates to a flexible multilayer heat sealable general purpose packaging film and to a method of forming the same.

In the packaging of certain types of foods, for example, loose products such as cookies, potato chips, and the like, it is common practice to employ a multilayer film having two or more polymeric layers wherein one of the layers is known to be an effective heat seal layer. In the packaging process, a supply of such a multilayer film can be shaped into a tube in a vertical form and fill machine. Marginal regions of the heat seal layer are brought into face to face relationship and heat sealed together. Thereafter, the packaging machine automatically forms a heat seal and makes a horizontal severance across the bottom of the bag; product is dispensed into the open end of the tube and thereafter a second horizontal seal is effected across the tube with a simultaneous severing through the tube to result in a product packaged in a tube, heat sealed at both ends and along one seam at right angles to the end seals. While the food or other product is being dispensed into the package, air is also present in the package and this air assists in protecting and cushioning the product during subsequent shipment of the finished packages. During shipment of the product, particularly with larger size bags, e.g., those containing 454 gm (16 ounces) of product, the bags have a tendency to split or burst at the end seals.

A multilayered wrapping film of the type having the above mentioned utility is described in U.S. Patent No. 4,214,039. This patent describes a packaging film structure comprising a polypropylene film substrate having a heat sealable vinylidene chloride polymer containing at least 50% by weight of vinylidene chloride. In between the polypropylene film and the vinylidene chloride polymer is a primer coat which consists of the reaction product of an acidified aminoethylated vinyl polymer and an epoxy resin. This primer coat enhances the bond strength between the polypropylene and the heat sealable vinylidene chloride polymer. While this packaging material is effective for the packaging of comparatively small quantities of product, there exists a need to increase its seal strength when used for the packaging of comparatively large quantities of product. Particularly there is a need to increase the seal strength between the polypropylene layer and the primer layer.

The present invention provides a heat-sealable, preferably an oriented heat sealable multi-layer structure which comprises:

(a) a substrate comprising a polyolefin film;
(b) a polymeric skin layer on at least one surface of (a) comprising:
(1) a terpolymer of propylene with ethylene and 1-butene;
(2) a blend of
(i) a medium density polyethylene, a high density polyethylene or mixtures thereof; and
(ii) polypropylene;
(3) a very low density polyethylene or a blend thereof with polypropylene; or
(4) a blend of
(i) a linear low density copolymer of ethylene with from 2 to 8% by weight of a $C_3$–$C_{10}$ alpha olefin, and
(ii) polypropylene;
(c) a primer coating layer (b); and
(d) a heat sealable layer on coating (c) and selected from a vinylidene chloride polymer and an acrylic polymer.

In preferred forms of the babove-identified structure one or both sides of the film can have either an acrylic or a vinylidene chloride polymer film. Alternatively, one surface of the film may be a heat sealable acrylic layer while the opposite surface is a heat sealable vinylidene chloride polymer surface.

The polyolefins contemplated as the substrate or core material of the subject film structure include polyethylene, polypropylene, polybutene and copolymers and blends thereof. Particularly preferred is an isotactic polypropylene containing at least 80% by weight of isotatic polypropylene. It is preferred that the polypropylene has a melt flow index from 4 to 8 g/10 minutes.

The preferred base substrate layer can be homopolypropylene having a melting point range from 161° to 169°C (321–336°F). A commercially available material of this description is ARCO W472 which has a melt flow range of 4 to 5 and contains no slip or anti-block additives ("ARCO" is a registered Trade Mark).

The polymeric skin layer coextruded with the base polyolefin, in some way not completely understood, functions to increase the overall bond strength formed in ESM seals or crimp seals when employing either acrylic or vinylidene chloride polymer heat seals.

As mentioned above, the polymeric skin layer is selected from:

(1) a terpolymer of propylene with ethylene and 1-butene;
(2) a blend of
(i) a medium density polyethylene, a high density polyethylene or mixtures thereof; and
(ii) polypropylene;

(3)
(i) a very low density polyethylene or
(ii) a blend of a very low density polyethylene and polypropylene; and
(4) a blend of
(i) a linear low density copolymer of ethylene with a minor proportion of a $C_3$–$C_{10}$ alpha olefin, and
(ii) polypropylene

In one embodiment of the present invention, the polymeric skin layer comprises terpolymers which are comparatively low stereoregular polymers. The terpolymers can have a melt flow rate at 230°C (446°F) ranging from about 2 to 10 and preferably 4 to 6. The crystalline melting point can range from less than 121°C (250°F) to somewhat greater than 133°C (271°F). The terpolymers will predominate in propylene and the ethylene and 1-butene monomers can be present in approximately from 0.3–1:1 mole percentage in relation to each other. Preferred terpolymers have melting points of about 130°C (266°F) and 124°C (255°F), respectively. The materials are commercially available as Chisso XF 7500 and Chisso XF 7700. These terpolymers contain from about 1–7 wt.% ethylene and 1–7 wt.% 1-butene.

In a second embodiment of the present invention, the polymeric skin layer comprises a blend of polypropylene and either a medium density polyethylene, a high density polyethylene or a mixture of the medium and high density polyethylene. The contemplated medium or high density polyethylene can be produced by a number of different processes, but in all cases the pressures and temperatures are much lower than those required by a low density polyethylene process. The American Society for Testing and Materials types polyethylenes as follows: Type 1 is low density polyethylene and can be considered to have a density ranging from 0.910 to 0.925; Type 2 is medium density polyethylene and it ranges from 0.926–0.940; and Type 3 is high density polyethylene with a density of from 0.941 to 0.960. This is consistent with the classification given in Modern Plastics Encyclopedia, 1983–1984, Volume 60, No. 10A, page 57. For purposes of the present invention the high density should be extended up to 0.965. These materials, i.e. medium and high density PE, should have a melt index from 0.2 to about 5. These low pressure or high density polyethylenes are well known in the art and have very different properties from low density polyethylenes. They are prepared by reacting ethylene monomer in the presence of a metallic oxide catalyst. The medium and high density polyethylenes so produced may be linear, or may contain controlled amounts of branching. These polyethylenes are to be distinguished from high density, high molecular weight polyethylenes having a weight average molecular weight of above about one-half million. The contemplated medium and high density polyethylenes are commercially available from several sources.

As mentioned above, the polymeric skin layers in this second embodiment are fabricated from a physical blend of the medium or high density polyethylene or mixtures thereof and polypropylene. The polypropylene employed can be identical to the polypropylene employed can be identical to the polypropylene employed for the core layer. The two materials can be blended in a percent by weight from at least 2% by weight of the medium or high density polyethylene with the remainder being up to 98% polypropylene. The physical blend can be accomplished by any means which will form a uniform blend of the two components. The components can be premixed as solid dry granules and later melt blend for subsequent extrusion as skin layers on the core material. Alternatively, the material may be melt blended first, cooled and subdivided, and thus, be ready for use as a preformed.

In a third embodiment of the present invention, the polymeric skin layer comprises very low density polyethylenes (VLDPE) or a blend thereof with polypropylene. When the VLDPE is blended with polypropylene to form the polymeric skin layer, 2–100 wt.% VLDPE and 98–0 wt.% polypropylene can be used. The very low density polyethylenes have a density range of less than 0.910 and more specifically from 0.890 to 0.910 gm/cm³. These materials are of low crystallinity and are produced in a low pressure process. For processing, melt temperatures of between 204°C (400°F) and 232°C (450°F) are recommended. Specific materials commercially available are DFDA-1137, having a density of 0.906 gm/cm³ and a Melt Index of 0.8 g/10 minutes; and DFDA-1138, having a density of 0.900 gm/cm³ and a Melt Index of 0.40 g/10 minutes. These materials are available from Union Carbide Corporation, Danbury, CT.

In a fourth embodiment of the present invention, the polymeric skin layer comprises a blend of polypropylene and a linear low density copolymer of ethylene and a $C_3$–$C_{10}$ alpha olefin. The $C_3$–$C_{10}$ alpha olefin is present in the copolymer in a minor amount. Included among the $C_3$–$C_{10}$ olefinic hydrocarbons are propylene, 1-butene, 4-methyl-1-pentene, 1-hexane, 1-octene, 1-decene, etc. Mixtures of such olefinic hydrocarbon monomers also can be employed. These linear low density copolymers are commercially available materials and are manufactured by low pressure processes employing stereospecific catalysts. These materials usually contain from 2–8 wt.%, preferably 2.5–5 wt.%, of the $C_3$–$C_{10}$ alpha olefin hydrocarbon copolymerized with the ethylene, in sufficient amount to give from 5–15 branches per 1,000 carbon atoms in the linear polymer. Manufacturing processes for linear low density polyethylenes of this type are disclosed in U.S. Patent Nos. 4 076 698 and 4 205 021.

In this embodiment, the polymeric skin layers are fabricated from a physical blend of one of the above-identified liner low density polyethylene copolymers and polypropylene. A typical linear low density copolymer useful in this invention is a copolymer of ethylene and 1-octene (LLDPE-$C_8$). The 1-octene is present in the copolymer in approximately 2 to 6 wt.%. A suitable material is Dowlex 2047, available from Dow Chemical Co., Midland, Michigan which has a melt index of 2–3 and a density of 0.917 gm/cm³. The polypropylene employed can be identical to the polypropylene employed for the core layer. The two materials can be blended in a percent by weight from at least 2% by weight of the linear low density copolymer with the remainder being up to 98% polypropylene. The physical blend can be accomplished by any means which will form a uniform blend of the two components. The components can be premixed as solid dry granules and later melt blended for subsequent extrusion as skin layers on the core material. Alternatively, the material may be melt blended first, cooled and subdivided, and thus, be ready for use as a preformed material.

In preparing the multi-layer structure of the present invention, the polypropylene and the polymer skin layer are coextruded so that the skin layer is from 2 to 12% of the total thickness of the two layers. For some purposes, a layer of the terpolymer can be on both surfaces of a core layer of polypropylene, in which case two polymeric skin layers would amount to from 4 to 24% opf the total thickness of the three layers. In preparing the coextruded film it has been found advantageous and convenient to recycle certain quantities of scrap extrudate back into the base homopolymer polypropylene. Thus, the homopolymer polypropylene can have from 0 to 25% of reclaimed material interblended therein. This recycle material can contain from 0 to about 15% of the skin layer therein.

It has been found that the heat seal layers contemplated herein do not adhere well to polyolefin film surfaces even when the latter have been subjected to well known pretreatment operations such as, for example, treatment by corona discharge, flame, or oxidizing chemicals. The same has been found to be true in adhering the heat seal layers contemplated herein to the surface of the contemplated terpolymer. It has been found, however, that the use of certain primers intermediate between the skin layer and the heat seal layer provides an unexpectedly high level of adherence. As a result, all layers adhere to its adjacent layer with unexpectedly high tenacity.

The system contemplated for the formation of the multilayer packaging material of the present invention involves the use of three layers applied in succession to the surface of the chosen substrate layer. For example, when the substrate layer is polypropylene, one or both surfaces of the polypropylene film will have applied thereto the following layers progressing in order outwardly from the surface of the polypropylene: A coextruded layer of the polymeric skin layer, an appropriate primer material to create a bond between the skin layer and a surface heat seal layer, and the heat seal layer itself. Examples of primer materials include those defined in U.K. Patent No. 1 134 876 which discloses a primer produced by condensing a monoaldehyde with an interpolymer of acrylamide or methacrylamide and at least one other unsaturated monomer; and those defined in U.S. Patent No. 1 174 328 which discloses a material resulting from condensing aminoaldehyde with acrylamide or methacrylamide and subsequently interpolymerizing the condensation product with at least one other unsaturated monomer in the presence of a $C_1$–$C_6$ alkanol. A preferred primer coating resin of this type comprises a copolymer containing up to 90% by weight of styrene, up to 80% by weight of an alkyl acrylate, up to 15% by weight of methacrylic acid and 5% to 25% by weight of acrylamide which has been condensed with a solution of formaldehyde in n-butanol containing from 0.2 to 3 equivalents of formaldehyde for each amide group in the copolymer. Another primer resin of this type is a 50% solid solution of a copolymer resin containing 38.5 parts of styrene, 44 parts of ethyl acrylate, 2.5 parts of methacrylic acid and 15 parts of acrylamide which has been condensed with 5.2 parts of formaldehyde in n-butanol.

A particularly preferred primer material for the acrylic type heat seal layers contemplated herein has been found to be poly(ethyleneimine). The imine primer provides an overall adhesively active surface for thorough and secure bonding with the subsequently applied heat seal composition. It has been found that an effective coating solution concentration of the poly(ethyleneimine) applied from either aqueous or organic solvent media, such as ethanol is a solution comprising 0.1–0.6% by weight of the poly(ethyleneimine). A commercially available material of this type is known as Polymin M, a product of BASF-Wyandotte Corp.

Another particularly preferred primer material is the reaction product of an epoxy resin and an acidified amminoethylated vinyl polymer. The contemplated epoxy resins are glycidyl ethers of polyhydroxy compounds. Typical polyhydroxy compounds which may be used include bisphenol A, ring substituted bisphenol A, resorcinol, hydroquinone, phenol-formaldehyde, novolac resins, aliphatic diols, such as ethylene glycol, propylene glycol, 1,4-butanediol, 1,6-hexane-diol, glycerol, lower alkyl hydantoins and mixtures thereof. The preferred epoxy resins of the present invention are those made by the glycidation reaction between epichlorohydrin and bisphenol A. Epoxy resins of this type are commonly classified by their epoxy equivalent weight (EEW) which is defined as the weight of resin in grams which contains one gram equivalent of epoxy groups. Resins with an EEW ranging from 170 to 280 may be used in the present invention, but the preferred range is 180 to 210.

Although the specific structure of the epoxy resin is not critical to the primer employed, important considerations in the selection of the epoxy resin revolve around its physical state. For example, it must be liquid and capable of being readily dispersed or dissolved with the second component or curing agent as described hereinbelow. If the epoxy resin is of low viscosity, is may be stirred directly into the second component, i.e., curing agent. However, it is preferred to employ the epoxy resin in an aqueous emulsion.

The second component in the epoxy primer compositions of the present invention is an amino modified acrylic polymer which is water soluble. This polymer is a curing agent for the epoxy compound. The preferred material is described in U.S. Patent No. 3 719 629. This material may be generically described as an acidified aminoethylated interpolymer having pendent aminoalkylate groups. This material is produced by polymerizing acrylate, methacrylate, styrene or other suitable monomers with sufficient methacrylic or acrylic acid to give a —COOH content of 7.5 to 12.5%. Solvent polymerization techniques are preferred. The polymer is then reacted with ethyleneimine monomer and acidified with hydrochloric acid to render the polymer water soluble.

In one embodiment of the present invention, a liquid epoxy resin is emulsified in a solution of the curing agent by rapid stirring, the resultant dispersion is diluted with water to the desired concentration for coating, usually from 2 to 25% solids. When mixing the epoxy resin with the curing agent, it is generally preferred to use a stochiometric equivalent balance of epoxy and amine groups. However, it has been found that the stochiometric ratio may be varied over a wide range, from one epoxy to three amine groups through three epoxy groups to one amine group.

The composition of the heat sealable acrylic interpolymer is that defined in U.S. Patent No. 3 753 769. This material consists essentially of an interpolymer from 2 to 15 parts, and preferably from 2.5 to 6 parts by weight of acrylic acid, methacrylic acid or any mixture thereof and from 85 to 98 parts and preferably from 94 to 97.5 parts by weight of neutral monomer esters, the neutral monomer esters preferably comprising (1) methyl acrylate or ethyl acrylate and (2) methyl methacrylate. The interpolymer compositions are further characterized by preferably comprising from 30% to 55% by weight of methyl methacrylate when the alkyl acrylate is methyl acrylate, and from 52.5% to 69% by weight of methyl methacrylate when the alkyl acrylate is ethyl acrylate. The monomer components of the terpolymer are employed in a ratio such that the alkyl methacrylate monomer is present in an amount of at least 10% by weight of the total terpolymer composition and preferably from 20 to 80% by weight, and the alkyl acrylate monomer component in amounts of at least 10% by weight of the total composition, and preferably from 80 to 20% by weight.

As indicated above it is contemplated herein that one surface of the structure can be of the above described acrylic heat seal material and the opposite surface can be of a vinylidene chloride polymer heat seal material. Commercially available vinylidene chloride latexes having a vinylidene chloride content of at least 50% and preferably from 75% to 92% may be employed. The other ethylenically unsaturated comonomers may include alpha, beta-ethylenically unsaturated acids, such as acrylic and methacrylic acids; alkyl esters containing 1–18 carbon atoms of these acids, such as, methylmethacrylate, ethyl acrylate, butyl acrylate, etc. In addition, alpha, beta-ethylenically unsaturated nitrile such as acrylonitrile and methacrylonitrile can be employed. In addition, monovinyl aromatic compounds such as styrene and vinyl chloride may be employed.

Specific vinylidene polymer latexes contemplated comprise: 82% by weight vinylidene, 14% by weight ethyl acrylate and 4% by weight acrylic acid. Alternatively, a polymer latex comprising 80% by weight vinylidene chloride, 17% by weight methylacrylate and 3% by weight methacrylic acid can likewise be employed. In addition, the heat seal compositions described in U.S. Patent 4 058 649 can also be disclosed.

The multiply structure of the present invention can have an overall thickness within a wide range, but it is preferably from 0.013 mm (0.5) up to 0.044 mm (1.75) mils) in thickness. When the substrate is the homopolymer polypropylene it can have a film thickness of approximately 0.025 mm (1 mil). In this instance, the associated coextruded polymeric skin layer can be present in a thickness of from 0.0005 mm (0.02) to 0.003 mm (0.12 mils).

The primer dispersion, to be applied to the surface of the polymeric skin layer, can have a solids concentration from 0.1% up to 25%. The primer dispersion can be applied to the surface of the skin layer utilizing standard coating techniques so that a dry coating weight from 0.05 up to 0.25 gram/0.65 m² (1,000 square inches) of film is obtained. The thus coated film can be subsequently passed through a hot air oven to completely remove water and/or a solvent. Subsequently, this primer coated film can be coated with the appropriate heat seal polymer latex also using standard coating techniques, such as, gravure, roll coating, and the like. The heat seal coated system can thereafter be dried by passing it through a conventional hot air oven.

The amount of acrylic polymer applied to the substrate may be varied over a wide range depending upon the specific properties desired in the final film product. Coating weights from 0.3 to 1.2 grams per 0.65 m² (1,000 square inches) may be employed. If a 2-sided coated film is desired, optional but beneficial corona treating of the terpolymer coated substrate, the priming and the opposite heat seal polymer application can be repeated, either in-line or out-of-line.

In the following examples, the base films are all biaxially oriented by conventional means. In general, this includes forming the base film in sheet form and machine direction orienting (MDO) or stretching the same at the appropriate or optimum temperature, using transport rollers operating at different speeds. After the desired degree of MDO, the film is transverse direction oriented (TDO), for example, in a tentering apparatus, to impart an orientation or stretching which is at right angles to the MDO. The extent of orientation can be from 3 to 10 times its original dimension for the MDO and from 3 to 10 times in the TDO.

For the base film of Examples 2, 4, 16 and 17, the skin layer can be applied to the propylene film after the polypropylene has been machine direction oriented. In this event, the skin layer will only be transversely oriented while the polypropylene is biaxially oriented. The techniques of U.S. Patent No. 3 620 825 and 3 671 383 can be employed in this respect.

In the following examples the ESM heat seal test is a heat seal test designed to simulate conditions under which films might be sealed in a typical over-wrapping machine. For the test two strips of film are cut, 76.2 mm by 355.6 mm (3 by 14 inches), with the long direction being in the machine direction orientation of the film. The two strips of film are superimposed with coated surfaces, i.e. the acrylic surfaces, in contact and placed in a heat sealing machine with one movable heat sealing platen. On actuation, the heated platen lowers and contacts the film combination for a controlled period of time. The pressure used is that resulting from the force of a pressure cylinder set at 34.5 kPa (5 psi) and the time of contact is two seconds. A plurality of separate seals are simultaneously made on each strip of film. The film strips are cut 25.4 mm (one inch) wide and the seal strengths are determined by placing the free ends of the film in the jaws of a Sutter testing machine and peeling the seals apart at a rate of 508 mm (20 inches) per minute. The maximum force in grams is recorded as the heat seal strength.

Also, with respect to the following examples, a crimp seal test is carried out. This is designed to simulate conditions encountered in a device known in the industry as a "vertical form-and-fill" packaging machine. This type of machine is designed to horizontally crimp seals cross a tube of packaging, material dispense product into the tube, and, thereafter, again horizontally crimp seal the opposite end of the tube to form a filled, sealed tubular package. Simultaneously with the sealing of the tube, the tube is severed. In the crimp seal test two heated platens with serrated surfaces are brought together by air pressure at 138 kPa (20 pounds per square inch) on either side of the film strips for three-quarters of a second, then separated. Testing of the seals is carried as above.

EXAMPLE 1

A biaxially oriented homopolymer isotactic polypropylene film of approximately 0.025 mm (one mil) thickness was coated with the primer reaction product of the acidified aminoethylated vinyl polymer and epoxy resin of example 5 of aforementioned U.S. Pat. No. 4 214 039. The same general coating process of the examples was employed in coating the polypropylene film. The dry coating weight of the primer material was equivalent to 0.10 grams per 0.65 m² (1,000 square inches) of film. To the surface of the primer was applied a heat seal layer from an aqueous latex comprising a terpolymer resulting from the polymerization of 82% by weight of vinylidene chloride, 14% by weight of ethyl acrylate and 4% by weight of acrylic acid. The coating was dried to yield a coating weight of approximately 2.6 grams per 0.65 m² (1,000 square inches) of film.

EXAMPLE 2

Example 1 was repeated except that the primer composition and heat seal composition were deposited onto the skin layer surface of a coextruded biaxially oriented composite film of the same polypropylene as in Example 1 and a skin layer comprising an ethylene, propylene, 1-butene terpolymer containing from 1–7 wt.% ethylene and 1–7 wt.% 1-butene. The terpolymer had a melt flow of about 5.

The conbined thickness of the coextruded film was approximately 0.025 mm (1 mil) with the terpolymer amounting to approximately 6% of the total thickness.

ESM and Crimp seals were formed in the multiply structures of Example 1 and the comparative strength of these seals are shown in the following Table.

## TABLE

### Sealability (gm/in.)

| | Crimp Seals | ESM Seals |
|---|---|---|
| | 127°C (260°F) | 121°C –143°C ( 250–290°F) |
| Example 1 | 450 | 452 |
| Example 2 | 820 | 867 |

It is clear by the above showing that the heat seal strength of the film structure of Example 2 is significantly greater than that of Example 1.

EXAMPLE 3

For this example, Example 2 is repeated except that the coextruded biaxially otriented composite film is coated with a conventional poly(ethyleneimine) primer. To the surface of the primer is applied a heat seal layer from an aqueous solution comprising a terpolymer resulting from the polymerization of 51% by weight methyl methacrylate, 45% by weight of methyl acrylate and 4% by weight of methacrylic acid. When the multi-layer film of this Example is tested for the strength of its crimp and ESM seals, as in Examples 1 and 2, the strenghts of the seal of Example 3 will be seen to be significantly greater than that of Example 1.

EXAMPLES 4–9

Example 1 was repeated except that the primer composition and heat seal composition was deposited onto the skin surface of a coextruded biaxially oriented composite film of the same polypropylene as in Example 1 and blends of a medium density polyethylene (MDPE), Phillips Chemical TR 130 having a density of 0.937 and polypropylene (PP) in the proportions shown in the following Table. The combined thickness of the coextruded film was approximately 0.025 mm (1 mil) with the skin layer amounting to approximately 6% of the total thickness.

ESM and Crimp seals were formed in the multiply structures of Examples 1–7 and the comparative strength of these seals are shown in the following Table.

## TABLE

### Sealability (gm/in.)

|  |  | Crimp Seals 127°C (260°F) | ESM Seals 121°C–143°C (250–290°F)( AVE.) |
|---|---|---|---|
| Example 1 | polypropylene | 450 | 452 |
| Example 4 | 4% MDPE/96% PP | 490 | 500 |
| Example 5 | 6% MDPE/94% PP | 575 | 557 |
| Example 6 | 8% MDPE/92% PP | 610 | 483 |
| Example 7 | 15% MDPE/85% PP | 515 | 543 |
| Example 8 | 33% MDPE/67% PP | 760 | 755 |
| Example 9 | 67% MDPE/33% PP | 740 | 815 |

It is clear by the above showing that the heat seal strengths of the film structures of Examples 2–7 are significantly greater than that of Example 1.

EXAMPLES 10–15

For these examples, Examples 4–9 are repeated except that the coextruded biaxially oriented composite films are coated with a conventional poly(ethyleneimine) primer. To the surface of the primer is applied a heat seal layer from an aqueous solution comprising a terpolymer resulting from the polymerization of 51% by weight methyl methacrylate, 45% by weight of methyl acrylate and 4% by weight of methacrylic acid. When the multi-layer film of this Example is tested for the strength of its crimp and ESM seals, as in Examples 1–9, the strengths of the seals of Example 10–15 will be seen to be significantly greater than that of Example 1.

By employing a high density polyethylene, such as Phillips Chemical, DX 611 having a density of 0.960 results equivalent to that of the MPPE will be obtained.

EXAMPLE 16

Example 1 is repeated except that the primer composition and heat seal composition is deposited onto the VLDPE surface of a coextruded biaxially oriented composite film of the same polypropylene as in Example 1 and the very low density polyethylene is DFDA-1137, having a density of 0.906. The combined thickness of the coextruded film is approximately 0.025 mm (1 mil) with the VLDPE amounting to approximately 6% of the total thickness. The Crimp Seal and ESM Seal strength of this material exceed that of Example 1.

When the VDPE is blended with polypropylene to form the skin layer or layers on the base layer it can be in the ratio of about 2–100 wt.% VLDPE and 98–0 wt.% polypropylene.

EP 0 186 279 B1

EXAMPLE 17

Example 1 was repeated except that the primer composition and heat seal composition was deposited onto the skin surface of a coextruded biaxially oriented composite film of the same polypropylene as in Example 1 and skin layers of a linear low density copolymer of ethylene and 1-octene (Dowlex 2047) blended with the same polypropylene ("DOWLEX" is a registered Trade Mark). The film was 0.025 mm (1 mil) thick with the skins amounting to 6% of the thickness.

EXAMPLES 18–24

For these examples, Example 17 was repeated except the ratio of linear low density copolymer (LLDPE) to polypropylene (PP) in the skin layer blends were varied as shown in the table below.

ESM and Crimp seals were formed in the multiply structures of Examples 1 and 17–24 and the comparative strength of these seals are shown in the following Table.

TABLE

Sealability (gm/in.)

| | Crimp Seals 127°C | ESM Seals 121°C–143°C AVE. |
|---|---|---|
| Example 1 – polypropylene (no skin) | 450 | 452 |
| Example 17 – polypropylene skin 4% LLDPE/96% PP | 505 | 525 |
| Example 18 – polypropylene skin 6% LLDPE/94% PP | 520 | 540 |
| Example 19 – polypropylene skin 8% LLDPE/92% PP | 470 | 548 |
| Example 20 – polypropylene skin 15% LLDPE/85% PP | 563 | 660 |
| Example 21 – polypropylene skin 33% LLDPE/67% PP | 875 | 695 |
| Example 22 – polypropylene skin 67% LLDPE/33% PP | 700 | 810 |
| Example 23 – polypropylene skin 98% LLDPE/2% PP | 620 | 657 |
| Example 24 – polypropylene skin 100% LLDPE/0 | 710 | 730 |

It is clear by the above showing that the heat seal strength of the film structure of Example 17–24 are significantly greater than that of Example 1.

EXAMPLE 25

For this example, Example 17 is repeated except that the coextruded biasially oriented composite film is coated with a conventional poly(ethyleneimine) primer. To the surface of the primer is applied a heat seal layer from an aqueous solution comprising a terpolymer resulting from the polymerization of 51% by weight methyl methacrylate, 45% by weight of methylacrylate and 4% by weight of methacrylic acid.

8

When the multi-layer film of this Example is tested for the strength of its crimp and ESM seals, as in Examples 1 and 17–24, the strengths of the seal of this example are seen to be significantly greater than that of Example 1.

It has been determined that after the application of the primer layer and the heat seal layer it is advantageous to permit the structure to age for a certain minimum period of time in order to obtain the outstanding high heat seal bond that results from the present invention. Optimum aging can be accomplished over a period of time ranging from 25 hours to 21 days while maintaining the film at a temperature ranging from 0–66°C (32–150°F).

## Claims

1. A heat sealable multi-layer structure comprising:
(a) a substrate comprising a polyolefin film
(b) a polymeric skin layer on at least one surface of (a) comprising:
    (1) a terpolymer of propylene with ethylene and 1-butene;
    (2) a blend of
        (i) a medium density polyethylene, a high density polyethylene or mixtures thereof; and
        (ii) polypropylene;
    (3) a very low density polyethylene or a blend thereof with polypropylene; or
    (4) a blend of
        (i) a linear low density copolymer of ethylene with from 2 to 8% by weight of a $C_3$–$C_{10}$ alpha olefin, and
        (ii) polypropylene;
(c) a primer coating on layer (b); and
(d) a heat sealable layer on coating (c) and selected from a vinylidene chloride polymer and an acrylic polymer.

2. The structure of claim 1 wherein the polyolefin film comprises homopolymer polypropylene interblended with from 0 to 15 parts by weight of the polymeric skin layer.

3. The structure of claim 1 or 2 wherein the primer comprises a member selected from poly(ethyleneimine); the reaction product of an acidified aminoethylated vinyl polymer and an epoxy resin; the condensation product of a monoaldehyde with an interpolymer of acrylamide or methacrylamide and at least one other unsaturated monomer; and the condensation product of aminoaldehyde with acrylamide or methacrylamide interpolymerized with at least one other unsaturated monomer in the presence of a $C_1$–$C_6$ alkanol.

4. The structure of claim 1, 2 or 3 wherein layer (b) is on one surface of substrate (a).

5. The structure of claim 1, 2 or 3 wherein layer (b) is on both surfaces of substrate (a).

6. The structure of claim 1, 2, 3, 4 or 5 wherein the heat sealable layer (d) comprises a vinylidene chloride copolymer containing at least 50% by weight of vinylidene chloride.

7. The structure of claim 6 wherein said heat sealable layer (d) comprises an interpolymer of from 2 to 15 parts by weight of acrylic acid, methacrylic acid or mixtures thereof and from 85 to 98 parts by weight of neutral monomer esters comprising (1) methyl acrylate or ethyl acrylate and (2) methyl methacrylate.

8. The structure of any one of claims 1–7 wherein the heat sealable acrylic polymer is on one surface of the structure and the heat sealable vinylidene chloride polymer is on the opposite surface of the structure.

9. The structure of any one of claims 1–8 wherein layer (b)(1) contains from 1–7 wt.% ethylene and from 1–7 wt.% of 1-butene.

10. The structure of any one of claims 1–8 wherein in layer (b)(2) the density of the medium density polyethylene is from 0.926 to 0.940 gm/cc and the high density polyethylene is from 0.941 to 0.965 gm/cc.

11. The structure of any one of claims 1–8 and 10 wherein layer (b)(2) comprises a blend of at least 2% by weight of polyethylene and up to 98% by weight of polypropylene.

12. The structure of any one of claims 1–8 wherein the very low density polyethylene has a density of less than 0.910 gm/cc.

13. The structure of any one of claims 1–8 and 12 wherein layer (b)(3) comprises a blend of at least 2% by weight of very low density polyethylene and up to 98% by weight of polypropylene.

14. The structure of any one of claims 1–8 wherein layer (b)(4) comprises a blend of at least 2% by weight of linear low density polyethylene copolymer and up to 98% by weight of polypropylene.

## Patentansprüche

1. Heißsiegelbare Mehrschichtstruktur mit
(a) einem Substrat, das einen Polyolefinfilm enthält,
(b) einer polymeren Hautschicht auf wenigstens einer Oberfläche von (a) aus
    (1) einem Terpolymer aus Propylen mit Ethylen und 1-Buten,

(2) einer Mischung aus

(i) einem Polyethylen mittlerer Dichte, einem Polyethylen hoher Dichte oder Gemischen davon, und

(ii) Polypropylen,

(3) einem Polyethylen sehr niedriger Dichte oder einer Mischung davon mit Polypropylen, oder

(4) einer Mischung aus

(i) einem linearen Ethylencopolymer niedriger Dichte mit 2 bis 8 Gew.-% eines $C_3$-$C_{10}$-$\alpha$-Olefins und

(ii) Polypropylen,

(c) einem Grundiermittelüberzug auf der Schicht (b) und

(d) einer heißsiegelbaren Schicht auf dem Überzug (c), ausgewählt aus einem Vinylidenchloridpolymer und einem Acrylpolymer.

2. Struktur nach Anspruch 1, worin der Polyolefinfilm homopolymeres Propylen, vermischt mit 0 bis 15 Gew.-% der polymeren Hautschicht, enthält.

3. Struktur nach Anspruch 1 oder 2, worin das Grundiermittel ausgewählt ist aus Poly-(ethylenimin), dem Reaktionsprodukt aus einem angesäuerten aminoethylierten Vinylpolymer und einem Epoxidharz, dem Kondensationsprodukt aus einem Monoaldehyd und einem Copolymer aus Acrylamid oder Methacrylamid und wenigstens einem weiteren ungesättigten Monomer, und dem Kondensationsprodukt aus einem Aminoaldehyd und Acrylamid oder Methacrylamid, das mit wenigstens einem anderen ungesättigten Monomer in Gegenwart eines $C_1$-$C_6$-Alkanols polymerisiert wurde.

4. Struktur nach Anspruch 1, 2 oder 3, worin sich die Schicht (b) auf einer Oberfläche des Substrats (a) befindet.

5. Struktur nach Anspruch 1, 2 oder 3, worin sich die Schicht (b) auf beiden Oberflächen des Substrats (a) befindet.

6. Struktur nach Anspruch 1, 2, 3, 4 oder 5, worin die heißsiegelbare Schicht (d) ein Vinylidenchloridcopolymer mit wenigstens 50 Gew.-% Vinylidenchlorid enthält.

7. Struktur nach Anspruch 6, worin die heißsiegelbare Schicht (d) ein Copolymer aus 2 bis 15 Gewichtsteilen Acrylsäure, Methacrylsäure oder Gemischen davon und 85 bis 98 Gewichtsteile neutrale monomere Ester, enthaltend (1) Methylacrylat oder Ethylacrylat und (2) Methylmethacrylat, aufweist.

8. Struktur nach einem der Ansprüche 1 bis 7, worin das heißsiegelbare Acrylpolymer sich auf einer Oberfläche der Struktur und das heißsiegelbare Vinylidenchloridpolymer sich auf der gegenüberliegenden Oberfläche der Struktur befindet.

9. Struktur nach einem der Ansprüche 1 bis 8, worin die Schicht (b) (1) 1 bis 7 Gew.-% Ethylen und 1 bis 7 Gew.-% 1-Buten enthält.

10. Struktur nach einem der Ansprüche 1 bis 8, worin in der Schicht (b) (2) die Dichte des Polyethylens mittlerer Dichte 0,926 bis 0,940 g/cm³ und die des Polyethylens hoher Dichte 0,941 bis 0,965 g/cm³ betragen.

11. Struktur nach einem der Ansprüche 1 bis 8 und 10, worin die Schicht (b) (2) ein Gemisch aus wenigstens 2 Gew.-% Polyethylen und bis zu 98 Gew.-% Polypropylen enthält.

12. Struktur nach einem der Ansprüche 1 bis 8, worin das Polyethylen sehr niedriger Dichte eine Dichte von weniger als 0, 910 g/cm³ aufweist.

13. Struktur nach einem der Ansprüche 1 bis 8 und 12, worin die Schicht (b) (3) ein Gemisch aus wenigstens 2 Gew.-% Polyethylen sehr niedriger Dichte und bis zu 98 Gew.-% Polypropylen enthält.

14. Struktur nach einem der Ansprüche 1 bis 8, worin die Schicht (b) (4) ein Gemisch aus wenigstens 2 Gew.-% eines linearen Polyethylencopolymers niedriger Dichte und bis zu 98 Gew.-% Polypropylen enthält.

## Revendications

1. Structure multicouche thermoscellable comprenant:

(a) un support comprenant une pellicule polyoléfinique;

(b) une couche pelliculaire polymère sur au moins une surface de (a) et comprenant

(1) un terpolymère du propylène avec l'éthylène et le 1-butène;

(2) un mélange

(i) d'un polyéthylène moyenne tension, d'un polyéthylène haute densité ou d'un de leurs mélanges; et

(ii) de polypropylène;

(3) un polyéthylène très basse densité ou un mélange de ce dernier avec du polypropylène; ou

(4) un mélange

(i) d'un copolymère basse densité linéaire d'éthylène et de 2 à 8% en poids d'une alpha-oléfine en $C_3$–$C_{10}$, et

(ii) de polypropylène;

(c) une couche primaire sur la couche (b); et

(d) une couche thermoscellable sur la couche (c), choisie parmi un polymère de chlorure de vinylidène et un polymère acrylique.

2. Structure selon la revendication 1, dans laquelle la pellicule polyoléfinique comprend du polypropylène homopolymère en mélange avec 0 à 15 parties en poids de la couche pelliculaire polymère.

3. Structure selon les revendications 1 ou 2, dans laquelle le primaire comprend un constituant choisi parmi la poly(éthylène-imine); le produit de la réaction d'un polymère vinylique aminoéthylé acidifié et d'une résine époxyde; le produit de condensation d'un monoaldéhyde avec un interpolymère de l'acrylamide ou du méthacrylamide et d'au moins un autre monomère insaturé; et le produit de condensation d'un aminoaldéhyde avec l'acrylamide ou le méthacrylamide, interpolymérisé avec au moins un autre monomère insaturé en présence d'un alcanol en $C_1$-$C_6$.

4. Structure selon la revendication 1, 2 ou 3, dans laquelle la couche (b) se trouve sur une surface du support (a).

5. Structure selon la revendication 1, 2 ou 3, dans laquelle la couche (b) se trouve sur les deux surfaces du support (a).

6. Structure selon la revendication 1, 2, 3, 4 ou 5, dans laquelle la couche thermoscellable (d) comprend un copolymère de chlorure de vinylidène contenant au moins 50% en poids de chlorure de vinylidène.

7. Structure selon la revendication 6, dans laquelle ladite couche thermoscellable (d) comprend un interpolymère de 2 à 15 parties en poids d'acide acrylique, d'acide méthacrylique ou de leurs mélanges, et de 85 à 98 parties en poids d'esters monomères neutres comprenant (1) l'acrylate de méthyle ou l'acrylate d'éthyle et (2) le méthacrylate de méthyle.

8. Structure selon l'une quelconque des revendications 1 à 7, dans laquelle le polymère acrylique thermoscellable se trouve sur une surface de la structure et le polymère de chlorure de vinylidène thermoscellable sur la surface opposée de la structure.

9. Structure selon l'une quelconque des revendications 1 à 8, dans laquelle la couche (b)(1) contient de 1 à 7% en poids d'éthylène et de 1 à 7% en poids de 1-butène.

10. Structure selon l'une quelconque des revendications 1 à 8, dans laquelle, dans la couche (b)(2), la masse volumique du polyéthylène moyenne densité est de 0,926 à 0,940 g/cm³ et celle du polyéthylène haute densité est de 0,941 à 0,965 g/cm³.

11. Structure selon l'une quelconque des revendications 1 à 8 et 10, dans laquelle la couche (b)(2) comprend un mélange d'au moins 22% en poids de polyéthylène et jusqu'à 98% poids de polypropylène.

12. Structure selon l'une quelconque des revendications 1 à 8, dans laquelle le polyéthylène très basse densité a une masse volumique inférieure à 0,910 g/cm³.

13. Structure selon l'une quelconque des revendications 1–8 et 12, dans laquelle la couche (b)(3) comprend un mélange d'au moins 22% en poids de polyéthylène très basse densité et jusqu'à 98% en poids de polypropylène.

14. Structure selon l'une quelconque des revendications 1–8, dans laquelle la couche (b)(4) comprend un mélange d'au moins 2% en poids d'un copolymère de polyéthylène linéaire basse densité et jusqu'à 98% en poids de polypropylène.